# EUROPÄISCHE PATENTSCHRIFT

(11) **EP 3 377 827 B1**
(45) Veröffentlichungstag und Bekanntmachung des Hinweises auf die Patenterteilung: **07.08.2019**
(21) Anmeldenummer: 16778349.7
(22) Anmeldetag: 06.10.2016
(51) Int. Cl.: F24S 23/70, F24S 25/63

(54) **HELIOSTAT MIT HALTERUNG UND VERFAHREN ZUR HERSTELLUNG EINES HELIOSTATS**
HELIOSTAT WITH SUPPORT AND METHOD FOR PRODUCING A HELIOSTAT
HÉLIOSTAT AVEC SUPPORT ET PROCÉDÉ DE FABRICATION D'UN HÉLIOSTAT

(30) Priorität: 08.10.2015 DE 102015219527
(43) Veröffentlichungstag der Anmeldung: 26.09.2018
(73) Patentinhaber: SBP Sonne GmbH, 70197 Stuttgart (DE)
(72) Erfinder: BALZ, Markus, 72649 Wolfschlugen (DE); GOECKE, Verena, 70180 Stuttgart (DE)
(74) Vertreter: Pons
(86) Internationale Anmeldenummer: PCT/EP2016/073889
(87) Internationale Veröffentlichungsnummer: WO 2017/060357

(56) Entgegenhaltungen:
- EP-A1- 2 093 805
- DE-A1-102008 010 884
- JP-A- 2011 174 232
- US-A- 3 471 186
- US-A- 4 634 309

## Beschreibung

Die vorliegende Anmeldung betrifft einen Heliostaten und ein Verfahren zur Herstellung eines Heliostaten.

Aus der DE 103 18 276 A1 ist eine Halterung für Fassadenplatten mit einem Distanzelement bekannt. Das Distanzelement dient zum Ausgleich von Toleranzen des Abstands zwischen Unterkonstruktion und Fassadenplatte und ist daher mit Klemmschrauben axial verstellbar mit der Unterkonstruktion verbunden.

Aus der DE 43 40 509 A1 ist eine Haltevorrichtung für Fassaden- und Dachplatten mit einer lösbaren Kugelgelenkkupplung bekannt.

Aus der EP 2 093 805 A1 ist eine lösbare Windsogsicherung für PV-Module bekannt.

Die DE 100 18 929 A1 beschreibt einen Punkthalter für Glasplatten, der in der Lage ist, Spannungsspitzen, die zum Beispiel durch **Wärmedehnungen** verursacht werden, auszugleichen.

Aus der DE 10 2008 010 884 A1 ist ein Verfahren zum Fügen von zwei Fügebauteilen bekannt, das es ermöglicht, Abweichungen in den Abmessungen der Fügebauteile zu kompensieren. Dies erfolgt dadurch, dass ein Fügespalt nach dem Ausrichten der Fügebauteile zueinander mit einer aushärtenden Masse verfüllt wird.

Dadurch entsteht eine dauerhafte, nicht lösbare Verbindung zwischen den Fügebauteilen.

Ein Heliostat umfasst in der Regel eine Stütze (ein sog. Pylon) und eine Tragstruktur für eine Spiegelfläche, die in der Regel als verspiegelte Glasfläche ausgebildet ist.

Der Pylon und die Tragstruktur sind durch ein Gelenk mit zwei Freiheitsgraden verbunden. Über einen Stellantrieb wird die Spiegelfläche so ausgerichtet, dass die auf der Spiegelfläche auftreffende Solarstrahlung konzentriert und auf einen zentral angeordneten Receiver umgelenkt wird.

Die Spiegelfläche eines Heliostaten kann bis zu 150 m2 und mehr betragen. Entsprechend müssen die Pylone, die Tragstrukturen sowie die Gelenke und Antriebe sehr robust und belastbar sein, weil nur dann die Windlasten und das Eigengewicht des Heliostaten sicher aufgenommen und über das Fundament ins Erdreich eingeleitet werden können. Außerdem ist eine steife Konstruktion wichtig, um eine gute Nachführgenauigkeit zu erreichen. Nur dann trifft die gebündelte Solarstrahlung den Receiver an der gewünschten Stelle.

Die Halterungen, welche die Spiegelfläche mit der Tragstruktur verbinden, müssen ebenfalls hochbelastbar sein. Außerdem dürfen sie die Spiegelfläche nicht verspannen, weil dies Unebenheiten in der Spiegelfläche erzeugen würde, welche die optische Qualität der Spiegelfläche reduzieren. Außerdem muss die Verbindung zwischen Spiegelfläche und Tragstruktur einfach und rasch lösbar sein, damit die Spiegelfläche, z.B. im Fall von Glasbruch, ausgetauscht werden kann.

Aufgabe der vorliegenden Erfindung ist es, Heliostaten bereitzustellen, deren Halterungen diesen Anforderungen genügen. Außerdem soll ein Verfahren zur Herstellung von Heliostaten bereitgestellt werden.

Die Aufgabe wird erfindungsgemäß dadurch gelöst, dass die Halterung des Heliostaten unter anderem folgende zwei Merkmale aufweist:
1. Einen Sockel, der an einer Rückseite der Spiegelfläche fixiert ist. Der Sockel weist eine Aussparung und eine radial verlaufende Ausnehmung auf. Die Aussparung durchdringt die Ausnehmung. Die Ausnehmung dient dabei zur Aufnahme eines Verbindungselements.
2. Einen in die Aussparung des Sockels einsetzbaren Befestigungsstift, wobei der Befestigungsstift eine Nut aufweist, die mit dem Verbindungselement zusammenwirkt.

Insbesondere durch das in den Sockel einführbare Verbindungselement, das mit der Nut des Befestigungsstifts zusammenwirkt, wird ein einfaches und komfortables Austauschen der Spiegelflächen erreicht. Mit nur einem Handgriff kann das Verbindungselement aus der Halterung entfernt werden. Dabei wird der Befestigungsstift von dem Sockel der Halterung gelöst und die Halterung kann von der Tragstruktur getrennt werden.

Die Verbindung von Tragstruktur und Halterung wird hergestellt, indem das Verbindungselement in die Ausnehmung der Halterung eingesetzt wird.

Am äußeren (freien) Ende des Verbindungselements kann das Verbindungselement derart geformt bzw. gebogen sein, dass sich ein griffähnliches Element bildet. Das erleichtert das Einschieben und Herausziehen des Verbindungselements in und aus dem Sockel.

Das Verbindungselement weist eine U-förmige Aussparung und zwei Zungen auf, die mit der Nut des Befestigungsstifts formschlüssig verbindbar sind. Ein solches Verbindungselement kann einfach und kostengünstig hergestellt werden. Die Bedienung ist ebenfalls unkompliziert.

Über den in den Sockel einsetzbaren Befestigungsstift werden die Halterungen spannungsfrei mit der Tragstruktur verbunden. Dazu umfasst die Tragstruktur mindestens ein Profil, wobei das mindestens eine Profil der Tragstruktur mindestens eine Öffnung zur Aufnahme des Befestigingsstifts der Halterung aufweist.

Dabei ist ein Durchmesser der mindestens einen Öffnung mindestens doppelt so groß, bevorzugt dreimal oder viermal so groß wie ein Durchmesser des Befestigungsstifts. Durch den deutlich größeren Durchmesser der Öffnung im Vergleich zum Durchmesser des Befestigungsstifts ist viel "Luft" für den Befestigungsstift in der Öffnung vorgesehen. Dieses Spiel ist gewollt und führt dazu, dass sich beim Einfahren der Befestigungsstifte in die Tragstruktur keine Berührungen mit der Tragstruktur ergeben. Dadurch werden mechanische Verspannungen auf der Spiegelfläche vermieden.

Die Befestigungsstifte sitzen zunächst locker in der Öffnung des Profils der Tragstruktur.

Die Öffnung ist vorzugsweise topfartig ausgebildet, d.h. die Öffnung weist eine Wand auf, die nach dem Einführen des Befestigungsstifts im Wesentlichen parallel zur Längserstreckung des Befestigungsstifts verläuft.

Die Tragstruktur ist vorzugsweise als Stahlfachwerk ausgebildet. Dabei können einzelne Stäbe des Fachwerks, welche die Spiegelfläche tragen, im Querschnitt trapezförmig oder doppelt-trapezförmig ausgebildet sein. In diesen Stäben werden die zuvor beschriebenen Öffnungen eingebracht werden.

Um den Befestigungsstift nach dem Einführen in dem Profil zu fixieren, wird bei einer Ausführungsform ein Ringraum zwischen der Wand der Öffnung und dem Befestigungsstift mit einem flüssigen, aushärtbaren Klebstoff aufgefüllt. Dies führt zu einer sicheren Verbindung des Befestigungsstifts mit der Tragstruktur.

Es wird dazu vorgeschlagen, dass zwischen dem Sockel und der Tragstruktur ein Dichtungselement angeordnet ist. Das Dichtungselement, bspw. in Form eines Rings aus einem elastischen Material, verhindert, dass der flüssige Klebstoff zwischen dem Befestigungsstift und der Öffnung herausläuft.

Im Hohlraum kann neben der Öffnung zu beiden Seiten des trapezförmig oder doppelt-trapezförmig ausgebildeten Hohlraums beidseitig ein weiteres Dichtungselement vorgesehen sein, das beim Verkleben und Fixieren des Befestigungsstifts genutzt werden kann. Diese weiteren Dichtungselemente verhindern, dass der flüssige Klebstoff vor dem Aushärten aus dem Hohlraum ausläuft.

Die Dichtungselemente werden nur zum Verkleben des Befestigungsstifts mit der Profil benötigt. Wenn der Klebstoff ausgehärtet ist, dann haben die Dichtungselemente keine Funktion mehr.

Um die Verbindung des Klebstoffs und des Profils weiter zu verbessern, können im Innern des Profils Rillen oder Wülste ausgebildet sein.

In einem erfindungsgemäßen Verfahren zur Herstellung des Heliostats sind folgende Arbeitsschritte vorgesehen:
- Auflegen der Spiegelfläche auf eine vorgegebene Helling,
- Verbinden eines Befestigungsstifts mit einem Sockel einer Halterung,
- Positionieren und Verkleben mehrerer Sockel auf die Rückseite der Spiegelfläche, so dass die Befestigungsstifte der Halterungen später durch vorgesehene Öffnungen der Tragstruktur passen,
- Anordnen eines ringförmigen Dichtungselements auf dem Befestigungsstift jeder Halterung,
- Aufsetzen der Tragstruktur auf die Spiegelfläche, so dass die Befestigungsstifte in die zugeordneten Öffnungen der Tragstruktur einfahren, ohne die Tragstruktur zu berühren,
- Einfüllen eines flüssigen Klebstoffs an vorbestimmten Stellen im Innern des Profils bis ein gewünschter Füllstand erreicht ist.

Optional kann zu beiden Seiten der Öffnung jeweils ein weiteres Dichtungselement in einem Profil der Tragstruktur eingesetzt werden.

Ausführungsbeispiele der Erfindung sind in den Figuren dargestellt und werden in der nachfolgenden Beschreibung näher erläutert. Es zeigen, jeweils in schematischer Form:
Figur 1 einen Teil eines Heliostats, insbesondere während einer Montage;
Figur 2 eine Halterung des Heliostats aus Figur 1 im Längsschnitt;
Figur 3 die Halterung aus Figur 2 in einer perspektivischen Darstellung;
Figur 4 die Halterung aus Figur 2 oder 3 in einer Draufsicht;
Figur 5 einen Befestigungsstift der Halterung aus den Figuren 2 bis 4 im Detail;
Figur 6 ein Verbindungselement der Halterung aus den Figuren 2 bis 4 in einer Draufsicht und einer Seitenansicht;
Figur 7 die Halterung aus den Figuren 2 bis 4 mit aufgesetzter Tragstruktur in einem Längsschnitt in einer ersten Ausführungsform;
Figur 8 die Anordnung aus Figur 7 in einer Draufsicht;
Figur 9 die Anordnung aus Figur 7 oder 8 in einer perspektivischen Ansicht;
Figur 10 die Halterung aus den Figuren 2 bis 4 mit aufgesetzter Tragstruktur in einem Längsschnitt in einer zweiten Ausführungsform; und
Figur 11 die Anordnung aus Figur 10 in einer perspektivischen und längsgeschnittenen Ansicht.

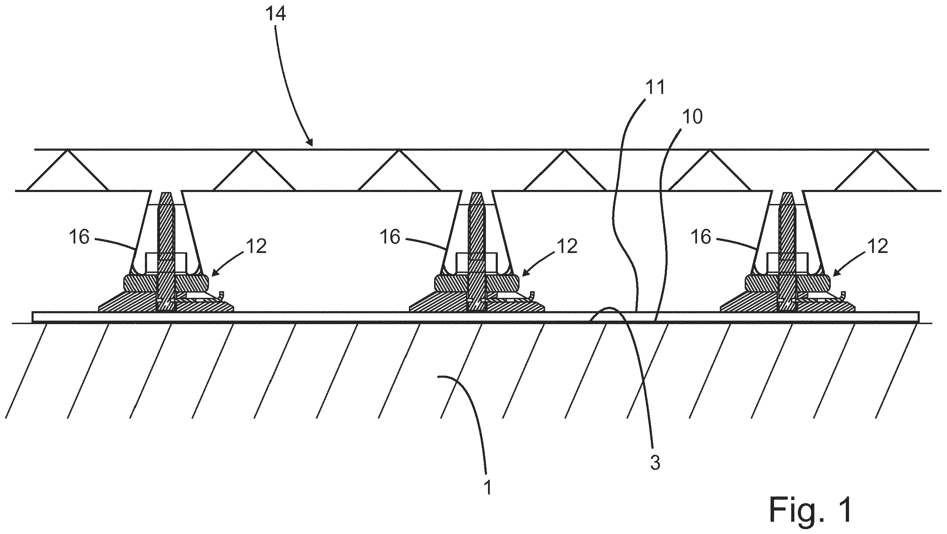

Figur 1 zeigt einen Teil eines Heliostats während der Montage auf einer Helling 1. Die Helling 1 ist eine Montagevorrichtung und nicht Teil des Heliostats. Die Helling 1 ist so gestaltet, dass sie auf ihrer einer Spiegelfläche 10 des Heliostats zugewandten Seite die gewünschte Form der Spiegelfläche 10 hat. Wenn nun die Spiegelfläche 10 auf diese Negativform 3 aufgelegt wird, bevor sie mit einer Tragstruktur 14 des Heliostats verbunden wird, dann nimmt die Spiegelfläche 10 die von der Helling 1 vorgegebenen gewünschte Form an. Mit anderen Worten: Die Helling 1 gibt der Spiegelfläche 10 die gewünschte Form, bevor die Spiegelfläche 10 mit der Tragstruktur 14 verbunden wird.

Der Heliostat umfasst, wie bereits erwähnt, eine Tragstruktur 14, die als Stahlfachwerk ausgeführt sein kann, und eine Spiegelfläche 10.

Damit die Spiegelfläche 10 das von ihr reflektierte Sonnenlicht mit geringen Verlusten und mit der gewünschten Fokussierung auf einen Solar-Receiver (nicht dargestellt) umlenkt, werden hohe Anforderungen an die geometrische Genauigkeit der Spiegelfläche gestellt. Die zulässige Abweichung der Spiegelfläche 10 von der vorgegebenen "idealen" Geometrie beträgt bei Heliostaten mit einer Spiegelfläche von mehr als 10 m2 nur 1 mm oder weniger. Die Tragstruktur 14 ist in der Regel eine geschraubte und/oder geschweißte Stahlkonstruktion, die häufig erst am Standort des Solarkraftwerks zusammengesetzt wird, um den Transport zu vereinfachen und Kosten zu sparen.

Je kleiner die zulässigen Toleranzen einer solchen Tragstruktur 14 sind, desto höher sind deren Herstellungskosten. Aus diesem Grund sind die zulässigen Toleranzen der Tragstruktur 14 wesentlich größer als die der Spiegelfläche. Sie können bei der Tragstruktur 14 mehrere Millimeter betragen.

Die Erfindung ermöglicht, diese Differenz der zulässigen Toleranzen bei der Montage der Heliostaten auszugleichen, so dass ein Heliostat mit exzellenten optischen Eigenschaften prozesssicher und zu günstigen Kosten hergestellt werden kann.

An einer Rückseite 11 der Spiegelfläche 10, vorzugsweise einer verspiegelten Glasfläche, sind mehrere Halterungen 12 angeordnet. Die Halterungen 12 sind mit der Rückseite 11 der Spiegelfläche 10 verklebt. Die Halterungen 12 bilden eine starre Verbindung zu einer Tragstruktur 14, die z.B. überwiegend aus Metallträgern hergestellt ist. Zur Verdeutlichung sind in Figur 1 die Halterungen 12 im Vergleich zu den Metallträgern oder der Spiegelfläche 10 vergrößert dargestellt.

Bei dem in Figur 1 dargestellten Ausführungsbeispiel weist die Tragstruktur 14 in bestimmten Bereichen ein trapezförmiges (Blech-)Profil 16 auf, welches die Halterung 12 teilweise umgibt.

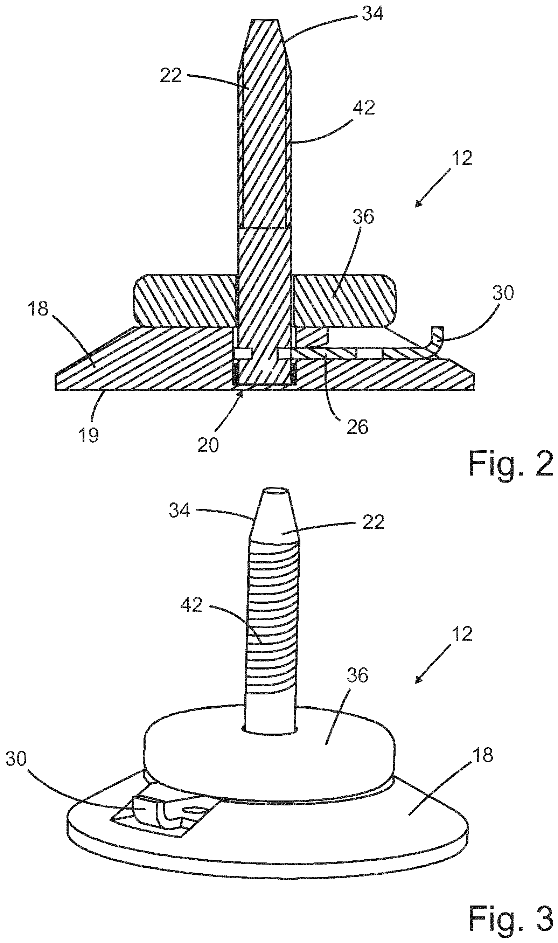

Die Figuren 2 bis 4 zeigen die Halterung 12 in unterschiedlichen Ansichten. Die Halterung 12 umfasst einen Sockel 18, mit dem die Halterung 12, vorzugsweise durch eine Klebeverbindung, an der Rückseite 11 der Spiegelfläche 10 fixiert wird. Die Kontaktfläche des Sockels 18 an der der Sockel 18 mit der nicht dargestellten Spiegelfläche 10 verklebt wird, hat das Bezugszeichen 19.

Der Sockel 18 kann aus Kunststoff, Keramik oder Metall hergestellt werden.

Der Sockel 18 weist eine Aussparung 20 auf, in die ein Befestigungsstift 22 im Wesentlichen orthogonal zu der Kontaktfläche 19 des Sockels 18 eingesetzt wird. Der Befestigungsstift 22 weist vorzugsweise einen kreisförmigen Querschnitt auf.

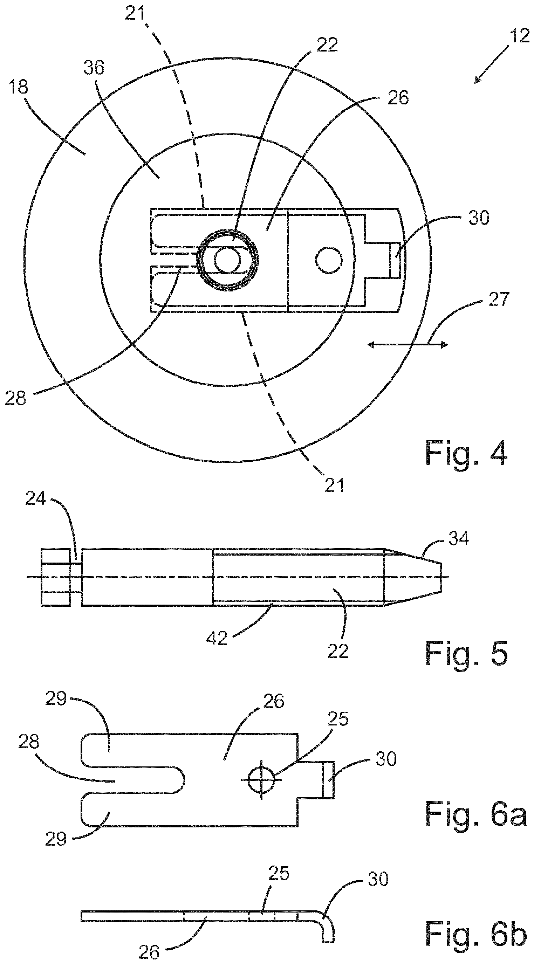

Der Befestigungsstift 22 ist formschlüssig und lösbar mit dem Sockel 18 verbunden. Dazu weist der Befestigungsstift 22 eine Nut 24 auf (siehe insbesondere Figur 5), in die ein Verbindungselement 26, bevorzugt aus Blech, eingesetzt werden kann. Das Verbindungselement 26 ist in den Figuren 6a und 6b dargestellt. Es weist eine U-förmige Aussparung 28 auf, die so bemessen ist, dass die Zungen 29 zu beiden Seiten der Aussparung 28 in die Nut 24 des Befestigungsstifts 22 passen. Die Breite der Aussparung 28 ist etwas größer als der Durchmesser des Befestigungsstifts 22 am Grund der Nut 24.

In dem Sockel 18 ist eine radial verlaufende Ausnehmung 21 vorhanden, welche die Aussparung 20 durchdringt. Um den Sockel 18 und den Befestigungsstift 22 formschlüssig miteinander zu verbinden, wird das Verbindungselement 26 mit der Aussparung 28 voran von außen in die Ausnehmung 21 eingeführt. Die Bewegungsrichtung beim Einsetzen des Verbindungselements 26 zeigt Pfeil 27 in Figur 4.

Dadurch fahren die Zungen 29 des Verbindungselements 26 in die Nut 24 des Befestigungsstifts 22 ein und bewirken eine formschlüssige und durch Herausziehen des Verbindungselements 26 lösbare Verbindung von Sockel 18 und Befestigungsstift 22.

Damit das Verbindungselement 26 beim Einsetzen oder beim Herausnehmen gut greifbar ist, weist ein freies Ende des Verbindungselements 26 einen Griff 30 auf, der in einer einfachen Ausführung z.B. durch Biegen des freien Endes erzeugt werden kann. Um das Herausfallen des Verbindungselements 26 aus der Ausnehmung 21 verhindern zu können, ist in dem Verbindungselement 26 ein Durchbruch 25 ausgebildet. In diesen Durchbruch kann als Verliersicherung z.B. ein Splint (nicht dargestellt) eingesetzt werden.

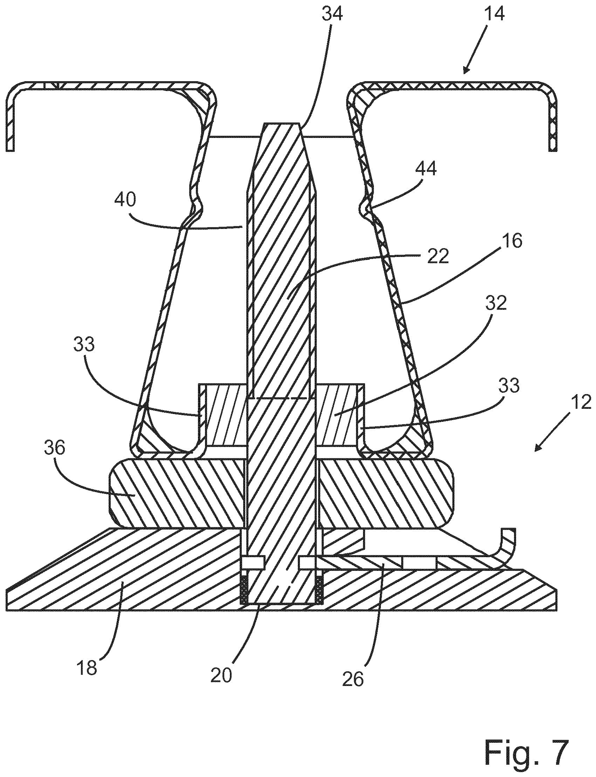

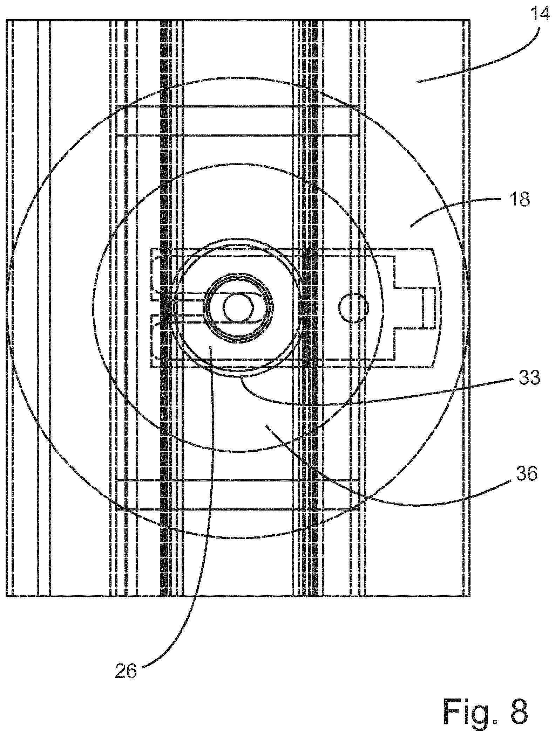

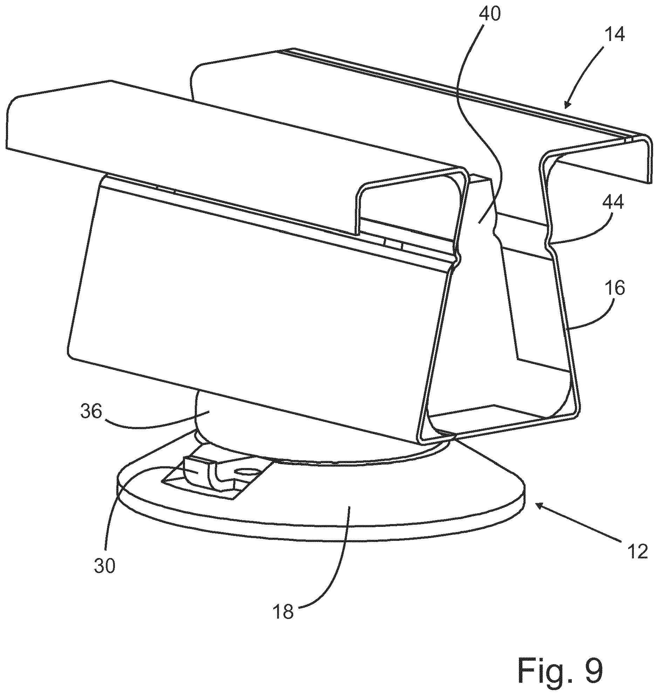

Die Figuren 7 bis 9 zeigen die Halterung 12 im Zusammenwirken mit einer ersten Ausführungsform einer Tragstruktur 14, die auf die Halterung 12 aufgesetzt wird, in verschiedenen Ansichten. Wie aus den Figuren 7 bis 9 ersichtlich ist, weist die Tragstruktur 14 jeweils in dem vorgesehenen Bereich zum Zusammenwirken mit der Halterung 12 ein bei diesem Ausführungsbeispiel im Querschnitt trapezförmiges Profil 16 auf.

Das Profil 16 weist in einem zur Halterung 12 zeigenden Bereich eine Öffnung 32 auf, in die der Befestigungsstift 22 eingeführt wird. Die Öffnung 32 ist topfartig ausgebildet.

Wie insbesondere aus Figur 7 ersichtlich ist, ist der Durchmesser der topfartigen Öffnung 32 deutlich größer als der Außen-Durchmesser des Befestigungsstifts 22.

Dadurch ist viel "Luft" zwischen dem Befestigungsstift 22 und der topfartigen Öffnung 32 vorhanden. Dieses Spiel ist gewollt, weil es das Aufsetzen der Tragstruktur 14 auf die auf der Helling 1 befindliche Spiegelfläche 10 mit aufgeklebten Halterungen 12 erleichtert. Insbesondere werden mechanische Verspannungen zwischen Tragstruktur 14 und der Spiegelfläche 10 verhindert.

Vorzugsweise ist die Öffnung 32 rohr- oder topfartig ausgebildet. Das bedeutet, dass die Öffnung 32 eine parallel zum Befestigungsstift 22 verlaufende (zylindrische) Seitenwand 33 aufweist.

Zum leichteren Einsetzen der Tragstruktur 14 auf die Halterung 12 kann der Befestigungsstift 22 am vom Sockel 18 entfernten Ende konisch verjüngt sein (siehe das Bezugszeichen 34). Zwischen dem Profil 16 und dem Sockel 18 ist ein Dichtungselement 36, bspw. in Form eines Rings aus einem elastischen Material, angeordnet.

Rechts und links der Öffnung 32 ist jeweils ein weiteres Dichtungselement 40 vorgesehen. Die Dichtungselemente 36 und 40 werden nur zum Verkleben des Befestigungsstifts 22 mit dem Profil 16 benötigt. Wenn der Klebstoff ausgehärtet ist, dann haben die Dichtungselemente 36 und 40 keine Funktion mehr.

Um den Befestigungsstift 22 mit dem Profil 16 zu Verkleben, wird der Ringraum zwischen der Wand 33 der Öffnung 32 und dem Befestigungsstift 22 mit einem flüssigen Klebstoff aufgefüllt Das Dichtungselement 36 verhindert, dass der flüssige Klebstoff nach unten aus der Öffnung 32 läuft. In entsprechender Weise verhindern die Dichtungselemente 40, dass flüssiger Klebstoff, der über den oberen Rand der Wand 33 fließt, sich in dem Profil 16 verteilt.

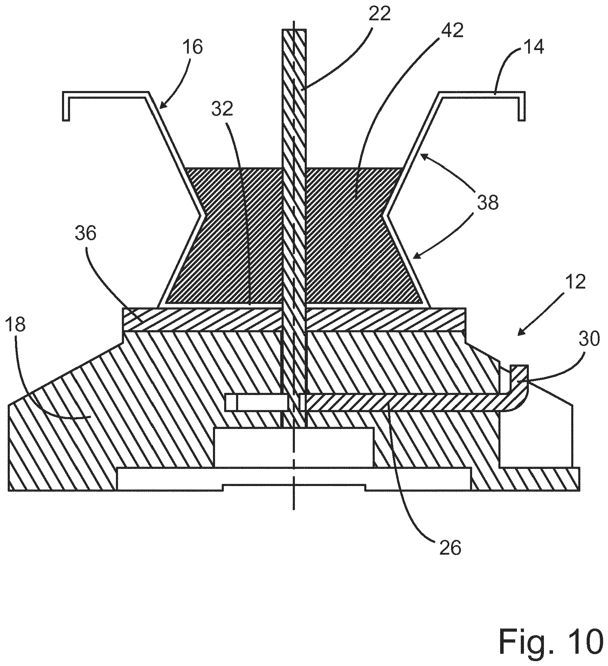

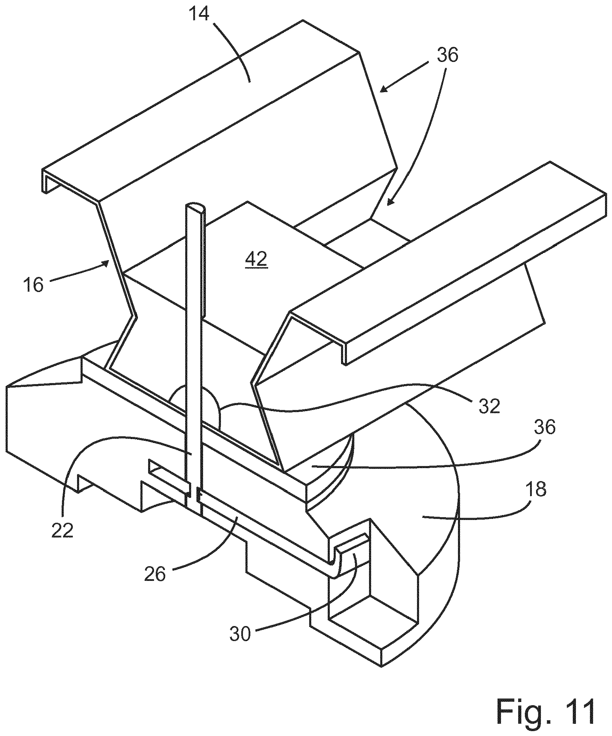

Die Figuren 10 und 11 zeigen die Halterung 12 im Zusammenwirken mit der auf die Halterung 12 aufgesetzten Tragstruktur 14 in einem Längsschnitt und einer geschnittenen perspektivischen Ansicht, wobei die Tragstruktur 14 in einer zweiten Ausführungsform dargestellt ist. Die Tragstruktur 14 weist ein Profil 16 mit doppelt trapezförmigem Querschnitt auf (siehe Bezugszeichen 38 in Figur 10 oder 11). Die Öffnung 32 hat bei diesem Ausführungsbeispiel keine Seitenwand. Daher wird das Profil 16 bis über die "Taille" des Profils 16 mit flüssigem Klebstoff gefüllt, um den Befestigungsstift 22 mit dem Profil zu verbinden. In den Figuren 10 und 11 ist der ausgehärtete Klebstoff 42 dargestellt. Die Dichtungselemente 40 sind nicht dargestellt. Freies Spiel für den Befestigungsstift 22 ist in den Figuren 10 und 11 nicht dargestellt.

Zur Befestigung der Spiegelfläche 10 an der Tragstruktur 14 werden die oben beschriebenen Halterungen 12 verwendet.

Die Verbindung von Spiegelfläche 10 und Tragstruktur 14 erfolgt in mehreren Schritten.

Zunächst werden mehrere Halterungen 12 mit ihren Sockeln 18 auf der Rückseite 11 der Spiegelfläche 10 so positioniert und festgeklebt, dass die Befestigungsstifte 22 der Halterungen 12 später durch die Öffnungen 32 der Tragstruktur 14 passen. Die Anordnung der Halterungen 12 auf der Spiegelfläche 10 korrespondiert also mit der Anordnung der Öffnungen 32 an der Tragstruktur 14.

Dieses Verkleben kann außerhalb einer Helling mit Hilfe einer Positioniervorrichtung erfolgen. Es kann aber auch in der Helling erfolgen. Anstelle einer Positioniervorrichtung kann das Aufsetzen und Positionieren auch mittels einer einfachen Roboters erfolgen, der die Halterungen und den Klebstoff in der gewünschten Weise platziert.

Auf die Befestigungsstifte 22 wird jeweils ein Dichtungselement 36 aufgeschoben.

In entsprechender Weise wird zu beiden Seiten der Öffnungen 32 ein Dichtungselement 40 in das Profil 16 der Tragstruktur 14 eingesetzt. Auch diese Tätigkeiten kann ein Roboter übernehmen. Alternativ können sie auch von einem Arbeiter ausgeführt werden. Der Zeitpunkt und der Ort (außerhalb oder in der Helling) können relativ frei gewählt werden. Man wird die Auswahl so treffen, dass die Herstellung einer Tragstruktur möglichst effizient von statten geht.

In einem Schritt wird die Spiegelfläche 10 auf die Helling 1 aufgelegt. Dadurch erhält die Spiegelfläche 10 die gewünschte Geometrie mit einer sehr großen Genauigkeit. Die Genauigkeit der Spiegelfläche 10 wird durch die Genauigkeit der Helling 1 vorgegeben und ist unabhängig von den (relativ großen) Toleranzen der Tragstruktur 14.

Anschließend werden Befestigungsstifte 22 jeweils in den Sockel 18 der Halterungen eingesetzt. Es ist alternativ auch möglich, die Befestigungsstifte 22 in die Sockel 18 der Halterungen einzusetzen, bevor diese mit der Spiegelfläche 10 verklebt werden.

Anschließend wird eine Tragstruktur 14 so auf Spiegelfläche 10 aufgesetzt, dass die Befestigungsstifte 22 in die Öffnungen 32 der Tragstruktur 14 einfahren, ohne die Tragstruktur 14 zu berühren. Dabei wird die Tragstruktur 14 so weit in Richtung der Spiegelfläche 10 abgesenkt, dass jedes Dichtungselement 36 das Profil 16 und den Sockel 18 berührt.

Dies ist ohne weiteres möglich, weil die Öffnungen 32 sehr viel größer sind als der Durchmesser der Stifte 22. Toleranzen zwischen den Sockeln 18 der Halterungen 12 und der Tragstruktur 14 in Richtung der Längsachse der Befestigungsstifte 22 führen dazu, dass der Abstand zwischen den Profilen 16 und der Spiegelfläche 10 an verschiedenen Halterungen 12 unterschiedlich ist. Diese Unterschiede werden durch das Zusammenpressen des Dichtungselements 36 egalisiert.

In einem weiteren Schritt wird nun von oben flüssiger Klebstoff an den vorbestimmten Stellen (d. h. in die topfartigen Öffnungen 32 bzw. zwischen die Dichtungselemente 40) eingefüllt bis ein gewünschter Füllstand erreicht ist. Sobald der Klebstoff fest geworden ist, ist die Spiegelfläche 10 spannungsfrei derart mit der Tragstruktur 14 verbunden, dass die Spiegelfläche 10 exakt die von der Helling 1 vorgegebene Geometrie hat und nicht durch die Tragstruktur 14 verformt wird. Die relativ großen Toleranzen der Tragstruktur 14 haben keinen (negativen) Einfluss auf die Genauigkeit der Spiegelfläche 10.

Als geeignet haben sich z.B. Zweikomponenten Epoxid-Klebstoffe erwiesen.

Die Dichtungselemente 36 und 40 werden nur für das Verkleben benötigt. Anschließend sind sie ohne Funktion.

Damit ist der Befestigungsstift 22, der Teil der Halterung 12 ist, mit der Tragstruktur 14 fest verbunden; ein Lösen des Befestigungsstifts 22 aus der Halterung 12 ist jedoch durch Herausziehen des Verbindungselements 26 aus dem Sockel 18 möglich.

Um die Verbindung des Klebstoffs und des Profils 16 weiter zu verbessern, können in dem Profil 16 Rillen oder Wülste 44 ausgebildet sein, so dass eine formschlüssige Verbindung entsteht.

## Patentansprüche

1. Heliostat umfassend eine Tragstruktur (14), eine Spiegelfläche (10) und eine Halterung (12) zum Verbinden der Spiegelfläche (10) mit der Tragstruktur (14), wobei die Tragstruktur (14) mindestens ein Profil (16) umfasst, wobei die Halterung (12) umfasst,
- einen Sockel (18), der an der Rückseite der Spiegelfläche (10) fixiert ist, wobei der Sockel (18) eine Aussparung (20) und eine Ausnehmung (21) aufweist, welche die Aussparung (20) durchdringt, wobei die Ausnehmung zur Aufnahme eines Verbindungselements (26) dient,
- einen in die Aussparung (20) des Sockels (18) einsetzbaren Befestigungsstift (22), wobei der Befestigungsstift (22) eine Nut (24) aufweist, die mit dem Verbindungselement (26) zusammenwirkt, wobei das Verbindungselement (26) eine U-förmige Aussparung (28) und zwei Zungen (29) aufweist, die mit der Nut (24) des Befestigungsstifts (22) formschlüssig verbindbar sind, **dadurch gekennzeichnet, dass** die Ausnehmung (21) in radialer Richtung verläuft, dass das mindestens eine Profil (16) der Tragstruktur (14) mindestens eine Öffnung (32) zur Aufnahme des Befestigungsstifts (22) der Halterung (12) aufweist, und dass ein Durchmesser der mindestens einen Öffnung (32) mindestens doppelt so groß, bevorzugt dreimal oder viermal so groß wie ein Durchmesser des Befestigungsstifts (22) ist.

2. Heliostat nach Anspruch 1, **dadurch gekennzeichnet, dass** zwischen dem Sockel (18) und der Tragstruktur (14) ein Dichtungselement (36) angeordnet ist.

3. Heliostat nach Anspruch 1 oder 2, **dadurch gekennzeichnet, dass** das Profil (16) im Querschnitt trapezförmig oder doppelt-trapezförmig ausgebildet ist.

4. Verfahren zur Herstellung eines Heliostats gemäß einem der vorhergehenden Ansprüche und wobei das Verfahren folgende Arbeitsschritte umfasst:
- Auflegen der Spiegelfläche (10) auf eine vorgegebene Helling (1),
- Aufsetzen der Tragstruktur (14) auf die Spiegelfläche (10), so dass die Befestigungsstifte (22) der Halterung (12) in die zugeordneten Öffnungen (32) der Tragstruktur (14) einfahren, ohne die Tragstruktur (14) zu berühren,
- Einfüllen eines flüssigen Klebstoffs an vorbestimmten Stellen im Innern des Profils (16) bis ein gewünschter Füllstand erreicht ist.

5. Verfahren nach Anspruch 4, **dadurch gekennzeichnet, dass** in einem vorgelagerten Verfahrensschritt mehrere Halterungen (12) mit ihren Sockeln (18) auf die Rückseite (11) der Spiegelfläche (10) so positioniert und geklebt werden, dass die Befestigungsstifte (22) der Halterungen (12) später durch vorgesehene Öffnungen (32) der Tragstruktur (14) passen.

6. Verfahren nach Anspruch 5, **dadurch gekennzeichnet, dass** das Positionieren und Kleben der Halterungen (12) mit Hilfe einer gesonderten Positioniervorrichtung erfolgt und/oder wenn die Spiegelfläche (10) auf der Helling (1) aufliegt.

7. Verfahren nach einem der Ansprüche 4 bis 6, **dadurch gekennzeichnet, dass** vor dem Aufsetzen der Tragstruktur (14) auf die Spiegelfläche (10) ein ringförmiges Dichtungselement (36) auf dem Befestigungsstift (22) jeder Halterung (12), und/oder mindestens ein weiteres Dichtungselement (40) in einem Profil (16) zur Aufnahme des Befestigungsstifts (22) aufgeschoben bzw. eingesetzt wird.

8. Verfahren nach einem der Ansprüche 4 bis 7, **dadurch gekennzeichnet, dass** die Befestigungsstifte (22) im Innern des Profils (16) unter Verwendung eines aushärtenden Klebers fixiert werden.

9. Verfahren nach einem der Ansprüche 4 bis 8, **dadurch gekennzeichnet, dass** die Befestigungsstifte (22) jeweils in den Sockel (18) einer Halterung (12) eingesetzt werden.

## Claims

1. A heliostat comprising a supporting structure (14), a mirror surface (10) and a mount (12) for connecting the mirror surface (10) to the supporting structure (14), wherein the supporting structure (14) comprises at least one profile (16), wherein the mount (12) comprises
- -a base (18), which is fixed to the rear side of the mirror surface (10), the base (18) having a cutout (20) and a recess (21) which passes through the cutout (20), the recess serving to receive a connecting element (26),
- -a securing pin (22), which can be inserted into the cutout (20) of the base (18), the securing pin (22) having a groove (24), which interacts with the connecting element (26), wherein the connecting element (26) has a U-shaped cutout (28) and two tongues (29), which can be positively connected to the groove (24) of the securing pin (22),
**characterised in that** the recess (21) runs in the radial direction, **in that** the at least one profile (16) of the supporting structure (14) has at least one opening (32) for receiving the securing pin (22) of the mount (12), and **in that** a diameter of the at least one opening (32) is at least twice as large, preferably three or four times as large, as a diameter of the securing pin (22).

2. The heliostat according to claim 1 **characterised in that** a sealing element (36) is arranged between the base (18) and the supporting structure (14).

3. The heliostat according to claim 1 or 2 **characterised in that** the profile (16) is designed in a trapezoidal shape or double-trapezoidal shape in cross-section.

4. A method for producing a heliostat according to any one of the preceding claims, wherein the method comprises the following process steps:
- placing the mirror surface (10) on a predetermined setup (1),
- placing the supporting structure (14) onto the mirror surface (10) so that the securing pins (22) of the mount (12) engage into the associated openings (32) of the supporting structure (14) without contacting the supporting structure (14),
- filling a liquid adhesive at predetermined locations in the interior of the profile (16) until a desired filling level is reached.

5. The method according to claim 4 **characterised in that**, in a prior method step, a plurality of mounts (12) are positioned and adhesively bonded with their bases (18) on the rear side (11) of the mirror surface (10) in such a way that the securing pins (22) of the mounts (12) can later pass through the provided openings (32) in the supporting structure (14).

6. The method according to claim 5 **characterised in that** the positioning and gluing of the mounts (12) are carried out with the aid of a separate positioning device and/or when the mirror surface (10) rests on the setup (1).

7. The method according to any one of claims 4 to 6 **characterised in that**, before the supporting structure (14) is placed onto the mirror surface (10), an annular sealing element (36) is pushed or inserted onto the securing pin (22) of each mount (12), and/or at least one further sealing element (40) is pushed or inserted into a profile (16) for receiving the securing pin (22).

8. The method according to any one of claims 4 to 7 **characterised in that** the securing pins (22) are fixed in the interior of the profile (16) using a curing adhesive.

9. The method according to any one of claims 4 to 8 **characterised in that** each securing pin (22) is inserted into the respective base (18) of a mount (12).

## Revendications

1. Héliostat comprenant une structure de support (14), une surface de miroir (10) et un dispositif de fixation (12) pour connecter la surface de miroir (10) à la structure de support (14), la structure de support (14) comprenant, au moins, un profilé (16), le dispositif de fixation (12) comprenant
- une base (18) fixée à l'arrière de la surface de miroir (10), la base (18) présentant un évidement (20) et une cavité (21) qui pénètre dans l'évidement (20), l'évidement servant à recevoir un élément de connexion (26),
- une tige de fixation (22) pouvant être insérée dans l'évidement (20) de la base (18), la tige de fixation (22) présentant une rainure (24) coopérant avec l'élément de connexion (26), l'élément de connexion (26) présentant un évidement en forme de U (28) et deux languettes (29) qui peuvent être reliées positivement à la rainure (24) de la tige de fixation (22)
**caractérisé en ce que** l'évidement (21) s'étend dans la direction radiale, **en ce qu'**au moins un profilé (16) de la structure de support (14) présente, au moins, une ouverture (32) pour recevoir la tige de fixation (22) du dispositif de fixation (12) et **en ce que** le diamètre d'au moins une ouverture (32) est au moins deux fois plus grand, de préférence, trois fois ou quatre fois plus grand que le diamètre de la tige de fixation (22).

2. Héliostat, selon la revendication 1, **caractérisé en ce qu'**un élément d'étanchéité (36) est disposé entre la base (18) et la structure de support (14).

3. Héliostat, selon la revendication 1 ou 2, **caractérisé en ce que** le profilé (16) est formé en section transversale trapézoïdale ou double trapézoïdale.

4. Procédé de fabrication d'un héliostat, selon l'une quelconque des revendications précédentes et dans lequel le procédé comprend les étapes suivantes :
- placer la surface de miroir (10) sur une structure d'assemblage (1) prédéterminée,
- positionner la structure de support (14) sur la surface de miroir (10), de sorte que les tiges de fixation (22) du dispositif de fixation (12) s'engagent dans les ouvertures associées (32) de la structure de support (14), sans toucher la structure de support (14),
- remplir un adhésif liquide à des emplacements prédéterminés à l'intérieur du profilé (16) jusqu'à atteindre le niveau souhaité.

5. Procédé selon la revendication 4, **caractérisé en ce que**, dans une étape précédente du procédé, une pluralité de dispositifs de fixation (12) avec leurs bases (18) sur le dos (11) de la surface de miroir (10) sont positionnées et collées, de sorte que les tiges de fixation (22) des dispositifs de fixation (12) passent plus tard à travers les ouvertures prévues (32) de la structure de support (14).

6. Procédé selon la revendication 5, **caractérisé en ce que** le positionnement et le collage des dispositifs de fixation (12) ont lieu au moyen d'un dispositif de positionnement séparé et/ou lorsque la surface de miroir (10) repose sur la structure d'assemblage (1).

7. Procédé selon l'une des revendications 4 à 6, **caractérisé en ce qu'**avant de placer la structure de support (14) sur la surface de miroir (10), un élément d'étanchéité annulaire (36) est poussé ou inséré sur la tige de montage (22) de chaque support (12), et/ou au moins un autre élément d'étanchéité (40) est poussé ou inséré dans un profilé (16) destiné à recevoir la tige de fixation (22).

8. Procédé selon l'une des revendications 4 à 7, **caractérisé en ce que** les tiges de fixation (22) sont fixées à l'intérieur du profilé (16) à l'aide d'un adhésif durcissant.

9. Procédé selon l'une des revendications 4 à 8, **caractérisé en ce que** chaque tige de fixation (22) est insérée dans la base (18) respective d'un dispositif de fixation (12).
